(19) Europäisches Patentamt
European Patent Office
Office européen des brevets

(11) **EP 3 375 602 B1**

(12) **EUROPÄISCHE PATENTSCHRIFT**

(45) Veröffentlichungstag und Bekanntmachung des Hinweises auf die Patenterteilung:
**22.04.2020 Patentblatt 2020/17**

(51) Int Cl.:
*B32B 5/02* (2006.01)   *B32B 5/18* (2006.01)
*B32B 5/20* (2006.01)   *B32B 5/24* (2006.01)
*B60R 13/08* (2006.01)   *G10K 11/168* (2006.01)

(21) Anmeldenummer: **17179654.3**

(22) Anmeldetag: **04.07.2017**

(54) **SCHALLABSORBIERENDES TEXTILKOMPOSIT**

SOUND ABSORBING TEXTILE COMPOSITE

COMPOSITE TEXTILE INSONORISANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.03.2017 DE 102017002552**

(43) Veröffentlichungstag der Anmeldung:
**19.09.2018 Patentblatt 2018/38**

(73) Patentinhaber: **Carl Freudenberg KG**
**69469 Weinheim (DE)**

(72) Erfinder:
• **WEIK, Angela**
**68782 Bruehl (DE)**
• **SCHARFENBERGER, Gunter,**
**67227 Frankenthal (DE)**
• **VILLING-FALUSI, Sandra**
**68542 Heddesheim (DE)**

(56) Entgegenhaltungen:
**EP-A1- 2 275 253      EP-B1- 1 058 618**
**DE-A1- 19 821 532      US-A- 4 283 457**
**US-A1- 2006 021 823**

EP 3 375 602 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein schallabsorbierendes Textilkomposit. Die Erfindung betrifft ferner ein Verfahren zu seiner Herstellung sowie seine Verwendung zur Schallabsorption im Automobilbereich.

Stand der Technik

In US 5298694 A wird eine Methode zur Schallabsorption beschrieben, bei welcher ein akustisch isolierender Vliesstoff eingesetzt wird, welcher einen Anteil an Mikrofasern (meltblown microfibers) gemischt mit einem Anteil an gekräuselten Bauschfasern (crimped bulking fibers) aufweist. Die Mikrofasern umfassen einen mittleren Faserdurchmesser von unter 15 $\mu$m, vorzugsweise von 5 bis 10 $\mu$m, und liegen verteilt mit einem Gewichtsprozentverhältnis von 40:60 bis 95:5 im gekräuselten Stapelfaservliesstoff vor. Die akustische Wirksamkeit entsteht bei diesem Materialaufbau dadurch, dass durch den erhöhten Einsatz von Mikrofasern eine höhere innere Oberfläche im Vliesstoff erreicht wird, so dass die kinetische Energie der Schallwellen vermehrt in Wärmeenergie umgewandelt werden kann. Nachteilig an dem beschriebenen Vliesstoff ist, dass der Luftströmungswiderstand nur durch aufwendige Variation der Zusammensetzung des Gesamtkonstrukts geregelt oder vorgegeben werden kann.

Ferner sind Isolationsmaterialien zur Absorption von Schallwellen und zur thermischen Isolierung aus der DE 10163576 B4 bekannt, welche aus zwei unterschiedlichen thermoplastischen Matrixfasern (im Bereich von 0,8 und 1,7 dtex) sowie einem thermoplastischen Schmelzfaseranteil (2,2 dtex) bestehen. Dadurch wird ein mittlerer Faserdurchmesser von 1,3 dtex im gesamten Vliesstoff erzielt. Es wird deutlich, dass durch einen reduzierten Einsatz von Bindefasern (10 % des Fasergemischs) ein Vliesstoff entsteht, der gute Drapiereigenschaften besitzt und zudem eine innere Festigkeit des Vliesstoffes aufweist, welche aufgrund von sowohl mechanischer als auch thermischer Verfestigung erzielt wird. Prozessbedingt ist es jedoch nicht möglich die Akustik des Isolationsmaterials gezielt einzustellen. Darüber hinaus kann die Absorption der Schallwellen durch den Einsatz von feineren Stapelfasern nicht weiter verbessert werden, da nach dem heutigem Stand der Technik feinere Fasern unter 0,3 dtex nicht mehr prozesssicher auf Krempelanlagen gefahren werden können.

EP 1058618 B1 beschreibt ein schallabsorbierendes Dünnschichtlaminat, welches aus einer offenporigen Trägerschicht und einer zweiten offenporigen Faserschicht, besteht. Bei der offenporigen Trägerschicht kann es sich entweder um ein Faservlies mit einem Flächengewicht von weniger als 2000 g/m$^2$ und einer Dicke von weniger als 50 mm handeln oder um einen ultraleichten Kunststoff-Schaum mit einer Dichte von 16 bis 32 kg/m$^3$ und einer Dicke von mindestens 6 mm. Die zweite offenporige Faserschicht wird aus schmelzgeblasenen Mikrofasern erzeugt, welche einen Faserdurchmesser von bevorzugt 2 bis 5 $\mu$m aufweisen. Zudem wird ein Luftströmungswiderstand von 500 bis 5000 Ns/m$^3$ beschrieben. Durch den laminatartigen Aufbau des schallabsorbierenden Dünnschichtlaminats wird nun eine Strömungsschicht bereitgestellt, welche akustisch eingestellt werden kann. Nachteilig bei diesem Verbund ist die Tastsache, dass die Trägerschicht keine explizite akustische Relevanz aufzeigt.

Darstellung der Erfindung

Der Erfindung liegt die Aufgabe zu Grunde ein schallabsorbierendes Material bereitzustellen, das die Nachteile des Stands der Technik zumindest teilweise ausräumt. So soll die akustische Absorption einfach einstellbar sein und das Material soll mit einer hohen Kompressibilität und einem sehr guten Rückstellvermögen bei gleichzeitig geringem Flächengewicht herstellbar sein.

Darüber hinaus soll das schallabsorbierende Material in dem für die Automobilindustrie wichtigen Frequenzbereich von 800 Hz bis 2000 Hz sehr gute akustische Absorptionseigenschaften zeigen.

Diese Aufgabe wird gelöst durch ein schallabsorbierendes Textilkomposit gemäss Anspruch 1, umfassend

a) mindestens eine offenporige Trägerlage umfassend grobe Stapelfasern mit einem Titer von 3 dtex bis 17 dtex und feine Stapelfasern mit einem Titer von 0,3 dtex bis 2,9 dtex als Gerüstfasern, und
b) eine auf der Trägerlage angeordnete Strömungslage umfassend eine mikroporöse Schaumlage,

wobei der Strömungswiderstand des schallabsorbierenden Textilkomposits von 250 Ns/m$^3$ bis 5000 Ns/m$^3$ beträgt.

Überraschend wurde gefunden, dass mit dem erfindungsgemäßen Textilkomposit die oben beschriebenen Nachteile aus dem Stand der Technik vermieden werden können. Ferner wurde gefunden, dass ein Textilkomposit des obigen Aufbaus in dem für die Automobilindustrie wichtigen Frequenzbereich von 800 Hz bis 2000 Hz, hervorragende akustische Absorptionseigenschaften zeigt.

Ohne sich erfindungsgemäß auf einen Mechanismus festzulegen, wird vermutet, dass der gefundene überraschend hohe Schallabsorptionsgrad auf eine synergistische Wechselwirkung zwischen den Feinfasern und den Grobfasern der Trägerlage in Kombination mit der Strömungslage zurückzuführen ist. So wird vermutet, dass die besondere Auswahl von feinen Stapelfasern mit einem Titer von 0,3 dtex bis 2,9 dtex und groben Stapelfasern mit einem Titer von 3 dtex bis 17 dtex in der Trägerlage die Ausbildung einer für die Schallabsorption besonders geeignete Gerüststruktur ermöglicht, die selbst in der Lage ist Schallwellen zu absorbieren. Denn durch die geeignete Auswahl von feinen und groben Stapelfasern wird es ermöglicht die Trägerlage mit einer hohen Kompressibilität und einem hohen Rückstellvermögen auszustatten, wodurch die Strömungslage auf der Trägerlage optimal in Schwingung gebracht und somit besonders effizient Schallenergie absorbiert werden kann, gemäß der Wirkungsweise eines "biegeweichen Plattenabsorbers".

Darüber hinaus ermöglicht die Kombination aus offenporiger Trägerlage und mikroporöser Strömungslage eine einfache und gezielte Einstellung und Variationsfähigkeit der akustischen Eigenschaften des Textilkomposits. Ferner wurde gefunden, dass das erfindungsgemäße Textilkomposit mit hoher Kompressibilität und gutem Rückstellvermögen bei gleichzeitig niedrigen Flächengewichten gefertigt werden kann. So weist das Textilkomposit in einer bevorzugten Ausführungsform der Erfindung eine Kompressibilität von 70 % bis 100 %, noch bevorzugter von 75 % bis 100 % und insbesondere von 80 % bis 100 % und/oder ein Rückstellvermögen von 70 % bis 100 % auf, noch bevorzugter von 75 % bis 100 % und insbesondere von 80 % bis 100 %. Hierdurch kann das Textilkomposit leicht komprimiert werden und sich somit gleichzeitig sehr gut in die vorgegebenen Bauräume legen, da es durch das gute Rückstellvermögen sehr gut im Bauraum wieder aufspringen kann. Dies ermöglicht einen Einbau auch in Bauräumen mit schwierigen Geometrien und unterschiedlichen Dickenabmessungen.

Die Trägerlage ist ein Vliesstoff gemäß DIN EN ISO 9092.

Der Fasertiter der groben Stapelfasern der Trägerlage beträgt von 3 dtex bis 17 dtex. In einer bevorzugten Ausführungsform beträgt der Fasertiter von 3 dtex bis 12 dtex, und insbesondere von 3 dtex bis 9 dtex. Die groben Stapelfasern geben dem Textilkomposit die nötige Struktur und gewährleisten somit, dass auch im verbauten Zustand das Textilkomposit dimensionsstabil bleibt.

In einer bevorzugten Ausführungsform der Erfindung enthält die Trägerlage die groben Stapelfasern in einem Anteil von 5 Gew.% bis 90 Gew.%, noch bevorzugter von 10 Gew.% bis 90 Gew.%, noch bevorzugter von 20 Gew.% bis 90 Gew.%, noch bevorzugter von 30 Gew.% bis 90 Gew.%, 40 Gew.% bis 90 Gew.%, noch bevorzugter von 50 Gew.% bis 90 Gew.% und insbesondere von 60 Gew.% bis 90 Gew.%, jeweils bezogen auf das Gesamtgewicht der Trägerlage. Sofern die Trägerlage Bindefasern als weitere Fasern enthält, ist der Anteil der groben Stapelfasern vorzugsweise von 5 Gew.% bis 85 Gew.%, noch bevorzugter 10 Gew.% bis 85 Gew.%, noch bevorzugter von 20 Gew.% bis 80 Gew.% und insbesondere von 30 Gew.% bis 75 Gew.%, jeweils bezogen auf das Gesamtgewicht der Trägerlage. Sofern die Trägerlage keine Bindefasern als weitere Fasern enthält, ist der Anteil der groben Stapelfasern vorzugsweise von 10 Gew.% bis 90 Gew.%, noch bevorzugter 20 Gew.% bis 90 Gew.%, noch bevorzugter 30 Gew.% bis 90 Gew.%, noch bevorzugter 40 Gew.% bis 90 Gew.%, noch bevorzugter 50 Gew.% bis 90 Gew.%, noch bevorzugter von 60 Gew.% bis 90 Gew.% und insbesondere von 70 Gew.% bis 90 Gew.%, jeweils bezogen auf das Gesamtgewicht der Trägerlage.

Der Fasertiter der feinen Stapelfasern der Trägerlage des erfindungsgemäßen Textilkomposits beträgt von 0,3 dtex bis 2,9 dtex. In einer bevorzugten Ausführungsform beträgt der Fasertiter der feinen Stapelfasern von 0,5 dtex bis 2,9 dtex, noch bevorzugter von 0,5 dtex bis 2,5 dtex, und insbesondere von 0,5 dtex bis 2,0 dtex. Durch den Einsatz von feinen Stapelfasern in der Trägerlage kann auch in dieser Lage Schallenergie in Wärmeenergie umgewandelt werden aufgrund der nunmehr größeren inneren Oberfläche der Trägerlage.

In einer bevorzugten Ausführungsform der Erfindung enthält die Trägerlage die feinen Stapelfasern in einem Anteil von 10 Gew.% bis 90 Gew.%, noch bevorzugter von 10 Gew.% bis 80 Gew.%, noch bevorzugter von 10 Gew.% bis 70 Gew.%, noch bevorzugter von 10 Gew.% bis 60 Gew.%, 10 Gew.% bis 50 Gew.%, bevorzugter von 10 Gew.% bis 40 Gew.% und insbesondere von 10 Gew.% bis 30 Gew.%, jeweils bezogen auf das Gesamtgewicht der Trägerlage.

Erfindungsgemäß sind die Gerüstfasern Stapelfasern. Im Unterschied zu den gegebenenfalls in der Trägerlage enthaltenen Bindefasern liegen die Gerüstfasern nicht oder nur unwesentlich verschmolzen vor. Stapelfasern weisen im Unterschied zu Filamenten, die theoretisch eine unbegrenzte Länge aufweisen, eine definierte Faserlänge auf. Erfindungsgemäß bevorzugt weisen die als Gerüstfasern eingesetzten feinen und groben Stapelfasern, unabhängig voneinander eine Stapellänge von 20 mm bis 80 mm auf, noch bevorzugter von 25 mm bis 80 mm, insbesondere von 30 mm bis 80 mm. Als Gerüstfasern können Naturfasern, synthetische Fasern oder Gemische hiervon eingesetzt werden. Bevorzugt werden synthetische Fasern eingesetzt.

In einer bevorzugten Ausführungsform der Erfindung enthalten die als Gerüstfasern eingesetzten feinen und groben Stapelfasern, unabhängig voneinander mindestens ein Polymer ausgewählt aus der Gruppe, bestehend aus: Polyacrylnitril, Polyvinylalkohol, Viskose-, Polyamide, insbesondere Polyamid 6 und Polyamid 6.6, bevorzugt Polyolefine und ganz besonders bevorzugt Polyester, insbesondere Polyethylenterephthalat, Polyethylennaphthalat und Polybutylenterephthalat, Gemische und/oder Copolymere hiervon. Vorzugsweise enthalten die Gerüstfasern das mindestens eine Polymer in einem Anteil von mindestens 90 Gew.%, noch bevorzugter mindestens 95 Gew.%, insbesondere mehr als 97 Gew.%.

In einer besonders bevorzugten Ausführungsform der Erfindung weisen die Gerüstfasern mindestens ein Polymer ausgewählt aus der Gruppe, bestehend aus: Polyester, insbesondere Polyethylentherephtalat, Polyamid und

Gemische oder Copolymere hiervon, auf. In einer besonders bevorzugten Ausführungsform der Erfindung sind die Gerüstfaser Polyesterfasern, insbesondere aus Polyethylentherephtalat. Vorteilhaft hieran ist das selbsterlöschende Brennverhalten des Polyethylentherephtalats, welches wiederum relevant für den Einsatz des Textilkomposit im Automobilbereich ist.

Neben den feinen Stapelfasern und den groben Stapelfasern kann die Trägerlage noch weitere Fasern enthalten. Erfindungsgemäß bevorzugt enthält die Trägerlage zumindest teilweise verschmolzene Bindefasern als weitere Fasern. Als Bindefasern können die üblichen zu diesem Zweck verwendeten Fasern eingesetzt werden, sofern sie zumindest teilweise thermisch verschmolzen werden können. Bindefasern können einheitliche Fasern oder auch Mehrkomponentenfasern sein. Erfindungsgemäß besonders geeignete Bindefasern sind Fasern, bei denen die bindende Komponente einen Schmelzpunkt aufweist, der unterhalb des Schmelzpunkts der zu bindenden Gerüstfasern liegt, vorzugsweise mindestens 5°C, beispielsweise von 5°C bis 300°C, noch bevorzugter von 5°C bis 250°C, noch bevorzugter von 5°C bis 200°C und/oder vorzugsweise mindestens 10°C, beispielsweise von 10°C bis 300°C, noch bevorzugter von 10°C bis 250°C, noch bevorzugter von 10°C bis 200°C und/oder vorzugsweise mindestens 15°C, beispielsweise von 15°C bis 300°C, noch bevorzugter von 15°C bis 250°C, noch bevorzugter von 15°C bis 200°C, und/oder vorzugsweise mindestens 20°C, beispielsweise von 20°C bis 300°C, noch bevorzugter von 20°C bis 250°C, noch bevorzugter von 20°C bis 200°C und/oder vorzugsweise mindestens 25°C, beispielsweise von 25°C bis 300°C, noch bevorzugter von 25°C bis 250°C, noch bevorzugter von 25°C bis 200°C unterhalb des Schmelzpunkts der zu bindenden Gerüstfasern liegt. Weiter bevorzugt sind die Bindefasern Fasern, bei denen die bindende Komponente einen Schmelzpunkt aufweist, der unterhalb von 250°C, noch bevorzugter von 70 bis 235°C, noch bevorzugter von 125 bis 225°C, besonders bevorzugt von 150 bis 225°C, liegt. Geeignete Bindefasern sind insbesondere Fasern, die thermoplastische Polyester und/oder Copolyester, insbesondere Polybutylenterephthalat, Polyolefine, insbesondere Polypropylen, Polyamide, Polyvinylalkohol, sowie deren Copolymere und Gemische enthalten und/oder aus diesen Polymeren bestehen.

Erfindungsgemäß besonders geeignete Bindefasern sind Mehrkomponentenfasern, vorzugsweise Bikomponentenfasern, insbesondere Kern/Mantel-Fasern. Kern/Mantel-Fasern enthalten mindestens zwei Faserpolymere mit unterschiedlicher Erweichungs- und/oder Schmelztemperatur. Bevorzugt bestehen die Kern/Mantel-Fasern aus diesen zwei Faserpolymeren. Dabei ist diejenige Komponente, die die niedrigere Erweichungs- und/oder Schmelztemperatur aufweist, an der Faseroberfläche (Mantel) und diejenige Komponente, die die höhere Erweichungs- und/oder Schmelztemperatur aufweist, im Kern zu finden.

Bei Kern/Mantel-Fasern kann die Bindefunktion durch die Materialien, die an der Oberfläche der Fasern angeordnet sind, ausgeübt werden. Für den Mantel können die verschiedensten Materialien eingesetzt werden. Bevorzugte Materialien für den Mantel sind erfindungsgemäß Polybutylenterephthalat, Polyamid, Polyethylen, Copolyamide und/oder auch Copolyester. Für den Kern können ebenfalls die verschiedensten Materialien eingesetzt werden. Bevorzugte Materialien für den Kern sind erfindungsgemäß Polyester, insbesondere Polyetylenterephthalat und/oder Polyethylennaphthalat und/oder Polyolefine.

Die Verwendung von Kern-Mantel-Bindefasern ist erfindungsgemäß bevorzugt, da so eine besonders homogene Verteilung der Bindemittelkomponente im Vliesstoff erzielt werden kann.

Sofern die Trägerlage zumindest teilweise verschmolzene Bindefasern enthält, wird die Trägerlage vorzugsweise hergestellt ausgehend von einer Fasermischung, die die Bindefasern in einem Anteil von 10 Gew.% bis 50 Gew.%, noch bevorzugter von 10 Gew.% bis 40 Gew.%, insbesondere von 10 Gew.% bis 30 Gew.%, jeweils bezogen auf das Gesamtgewicht der Trägerlage, enthält.

In einer weiteren bevorzugten Ausführungsform der Erfindung beträgt der Anteil der bindenden Komponente mehr als 5 Gew.%, beispielsweise von 5 Gew.% bis 50 Gew.% jeweils bezogen auf das Gesamtgewicht der Trägerlage.

Erfindungsgemäß bevorzugt ist die Trägerlage durch die zumindest teilweise verschmolzenen Bindefasern gebunden und verfestigt. Bevorzugt sind die teilweise verschmolzenen Bindefasern ohne mechanische Beanspruchung verschmolzen, beispielsweise mit einem Durchlaufofen. Hieran ist vorteilhaft, dass der Vliesstoff hoch voluminös hergestellt werden kann und nicht durch mechanische Einwirkung an Volumen verliert. In einer weiteren bevorzugten Ausführungsform der Erfindung liegt das Volumenverhältnis Luft zu Faser in der Trägerlage von 50:1 bis 250:1, noch bevorzugter von 100:1 bis 225:1, insbesondere von 125:1 bis 200:1.

In einer weiteren Ausführungsform der Erfindung ist die Trägerlage bindergebunden, vorzugsweise zusätzlich zu der Verfestigung mit den Bindefasern. Als Binder können Polyacrylate, Polystyrole, Polyvinylacetatethylene, Polyurethane sowie deren Gemische und Co-Polymere eingesetzt werden.

Erfindungsgemäß bevorzugt ist die Trägerlage so leicht verfestigt, dass sich das schallabsorbierende Textilkomposit leicht drapieren und komprimieren lässt und somit in den verschiedensten Bauräumen eingesetzt werden kann.

Unter einer Strömungslage ist erfindungsgemäß eine mikroporöse Lage zu verstehen, welche einen spezifischen Strömungswiderstand, insbesondere von mehr als 200 $Ns/m^3$, beispielsweise von 200 $Ns/m^2$ bis 5000 $Ns/m$, noch bevorzugter von 250 $Ns/m^3$ bis 5000 $Ns/m^3$, noch bevorzugter von 350 $Ns/m^3$ bis 5000 $Ns/m^3$, und insbesondere von 450 $Ns/m^3$ bis 5000 $Ns/m^3$, aufweist. Vorteilhaft an dem Versehen der Trägerlage mit der Strömungslage ist, dass die Schallabsorptionseigenschaften der Trägerlage verbessert werden können. Dadurch kann das Flächengewicht der Trägerlage gering gehalten werden und dennoch ein Produkt mit hervorragenden akustischen Eigenschaften erhalten werden. Die Einstellung des Strömungswiderstandes der Strömungslage kann auf dem Fachmann bekannte Art und Weise durch gezielte Einstellung der Porendimensionen bzw. der Dichte erhalten werden.

Erfindungsgemäß weist die Strömungslage eine mikroporöse Schaumlage auf. Dabei ist unter einer mikroporösen Schaumlage eine zellige Struktur zu verstehen, die einen mittleren Porendurchmesser von 1 - 30 μm aufweist.

Vorteilhaft an der Verwendung von einer mikroporösen Schaumlage ist die Tatsache, dass durch die Vielzahl der kleinen Poren eine sehr große innere Oberfläche in der Schaumlage bereitgestellt wird, an der die Schallenergie besonders gut absorbiert werden kann. Dementsprechend weist die mikroporöse Schaumlage einen mittleren Porendurchmesser von 1 μm bis 30 μm, bevorzugt von 1 μm bis 25 μm und insbesondere von 1 μm bis 20 μm, auf.

Vorzugsweise ist die mikroporöse Schaumlage offenporig. Hierunter ist zu verstehen, dass die Zellwände zumindest teilweise nicht geschlossen sind, so dass die Schallenergie auch im Inneren der Schaumlage absorbiert werden kann.

Die mikroporöse Schaumlage kann aus den verschiedensten schaumbildenden Materialien hergestellt sein. Als besonders geeignet hat es sich erwiesen, wenn die mikroporöse Schaumlage Vinylacetat-Copolymer und/oder Polyacrylat und/oder Polyurethan enthält. Dabei enthält die mikroporöse Schaumlage die vorgenannten Polymere vorzugsweise in einem Anteil von mehr als 90 Gew.%, noch bevorzugter von mehr als 95 Gew.%, noch bevorzugter von mehr als 97 Gew.%. Insbesondere besteht die mikroporöse Schaumlage aus einen oder mehreren der vorgenannten Polymeren, wobei übliche Additive enthalten sein können.

Die Schaumlage kann auf herkömmliche Weise durch Aufschäumen von Polymerdispersionen bzw. Polymeremulsionen, beispielsweise durch mechanisches Aufschlagen hergestellt werden und durch übliche Auftragsmethoden, beispielsweise Streichverfahren aufgetragen werden.

Vorteilhaft an der Verwendung von Vinylacetat-Copolymeren ist, dass diese einfach und kostengünstig herzustellen sind. Mit ihnen gefertigte Schaumlagen weisen ferner eine besonders geringe Vergilbungsneigung auf. Darüber hinaus zeigen die Schaumlagen einen besonders geringen Schrumpf.

Bevorzugte Vinylacetat-Copolymere sind Vinylacetat-Ethylen-Copolymere. Diese können beispielsweise mittels Emulsionspolymerisation hergestellt werden. Erfindungsgemäß bevorzugt ist das Vinylacetat-Copolymer mithin hergestellt ausgehend von einer wässrigen Vinylacetat-Emulsion und/oder Vinylacetat-Dispersion, insbesondere einer Vinylacetat-Ethylen-Emulsion und/oder Vinylacetat-Ethylen-Dispersion enthaltend von 65 bis 98 Gew.-% Vinylacetat. Eine Vinylacetat-Ethylen-Emulsion und/oder Vinylacetat-Ethylen-Dispersion enthält vorzugsweise 65 bis 98 Gew.-% Vinylacetat sowie 2 bis 30 Gew.-% Ethylen, vorzugsweise 75 bis 95 Gew.-% Vinylacetat und 5 bis 25 Gew.-% Ethylen in wässrigem Medium, jeweils bezogen auf das Gesamtgewicht der Monomere.

Gegebenenfalls kann die Vinylacetat-Emulsion und/oder Vinylacetat-Dispersion noch bis zu 10 Gew.-%, vorzugsweise 0,1 bis 10 Gew.-%, jeweils bezogen auf das Gesamtgewicht der Monomere, weitere Comonomere enthalten.

Geeignete weitere Comonomere für die Vinylacetat-Emulsion und/oder Vinylacetat-Dispersion sind beispielsweise solche aus der Gruppe der Vinylester mit 3 bis 12 C-Atomen im Carbonsäurerest wie Vinylpropionat, Vinyllaurat, Vinylester von alpha-verzweigten Carbonsäuren mit 8 bis 11 C-Atomen. Geeignet sind auch Methacrylsäureester oder Acrylsäureester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Geeignet sind auch Vinylhalogenide wie Vinylchlorid.

Geeignete weitere Comonomere sind auch ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Di-vinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylol-acrylamid (NMA), N-Methylolmethacrylamid (NMMA), N-Methylolallylcarbamat, Alkylether wie der I sobutoxyether oder Ester des N-Methy- lolacrylamids, des N-Methylolmethacrylamids und des N-Methylolallyl-carbamats . Geeignet sind auch Monomere mit Hydroxy- oder Carboxyl- Gruppen, wie beispielsweise Methacrylsäure- und Acrylsäurehydroxyal- kylester wie Hydroxyethyl- , Hydroxypropyl- oder Hydroxybutylacrylat oder -methacrylat sowie 1 , 3-Dicarbonylverbindungen wie Acetacetoxy-ethylacrylat, Acetacetoxypropylmethacrylat, Acetacetoxyethylmethacrylat, Acetacetoxybutylmethacrylat , 2, 3-Di (acetacetoxy) propylmeth- Polyacrylat und Acetessigsäureallylester.

Die Monomerauswahl erfolgt dabei bevorzugt so, dass das Vinylacetat-Copolymer insbesondere das Vinylacetat-Ethylen-Copolymer eine Glasübergangstemperatur Tg von -20°C bis +20°C aufweist, bevorzugt von - 20°C bis +0°C, noch bevorzugter von -20°C bis -10°C.

Die Glasübergangstemperatur Tg der Polymere kann in bekannter Weise mittels DSC (Dynamische Differenz-Thermoanalyse, DIN EN ISO 11357) bestimmt werden.

Ganz besonders bevorzugt wird ein Vinylacetat-Copolymer mit dem Handelsnamen Vinamul® Elite 25 der Fa. Celanese Emulsions eingesetzt.

Bevorzugte Polyacrylate sind Polybutylacrylate, im Folgenden auch kurz Butylacrylate genannt. Butylacrylate können ebenfalls mittels Emulsionspolymerisation hergestellt werden. Bevorzugt ist das Polyacrylat mithin hergestellt ausgehend von einer Polyacrylat-Emulsion und/oder Polyacrylat-Dispersion, insbesondere einer Butylacrylat-Emulsion und/oder Butylacrylat-Dispersion enthaltend vorzugsweise mindestens 40 Gew.-%, bevorzugt mindestens 50 Gew.-%, besonders bevorzugt mindestens 60 Gew.-% aus n-Butylacrylat oder n-Butylmethacrylat (kurz n-Butyl(meth)acrylat); bevorzugt ist n-Butylacrylat.

Neben den vorgenannten Butylacrylaten kann die Polyacrylat-Emulsion und/oder Polyacrylat-Dispersion weitere Comonomere, vorzugsweise ausgewählt aus C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren, enthalten. Zu nennen sind z. B. (Meth)acrylsäurealkylester mit einem C1-C10-Alkylrest, wie Methyl-methacrylat, Methylacrylat, Ethylacrylat und 2-Ethylhexylacrylat.

Besonders bevorzugte Comonomere sind nachvernetzende Comonomere, beispielsweise Acrylamidoglykolsäure (AGA), Methylacrylamidoglykolsäuremethylester (MAGME), N-Methylol-acrylamid (NMA), N-Methylolmethacrylamid (NMMA), N-Methylolallyl-carbamat, Alkylether wie der Isobutoxyether oder Ester des N-Methy-lolacrylamids, des N-Methylolmethacrylamids und des N-Methylolallyl-carbamats.

Die Monomerauswahl erfolgt dabei bevorzugt so, dass das Polyacrylat insbesondere das Butylacrylat eine Glasübergangstemperatur Tg von < -25 C aufweist, beispielsweise von -50°C bis -25°C, bevorzugt von -45°C bis -25°C noch bevorzugter von -40°C bis -25°C.

Ganz besonders bevorzugt wird ein Polyacrylat mit dem Handelsnamen Appretan® N 92100 der Fa. Archroma eingesetzt.

Für die Schaumlage können ferner die verschiedensten Polyurethane eingesetzt werden. Erfindungsgemäß bevorzugt sind aliphatische Polyurethane, da diese eine nur geringe Vergilbungsneigung aufweisen. Besonders bevorzugt sind Polyesterpolyurethane. Ebenfalls besonders bevorzugt sind Polyurethane, hergestellt aus wässrigen Polymerdispersionen. Erfindungsgemäß besonders bevorzugt erfolgt die Herstellung der Polyurethane durch

I. Umsetzung von

a) mindestens einem aliphatischen oder aromatischen mehrwertigen Isocyanat,
b) Diolen, von denen

b1) 10 bis 100 mol-%, bezogen auf die Gesamtmenge der Diole (b), ein Molekulargewicht von 500 bis 5000 aufweisen, und
b2) 0 bis 90 mol-%, bezogen auf die Gesamtmenge der Diole (b), ein Molekulargewicht von 60 bis 500 g/mol aufweisen,

c) von den Monomeren (a), (b) verschiedenen Monomeren mit wenigstens einer Isocyanatgruppe oder wenigstens einer gegenüber Isocyanat-gruppen reaktiven Gruppe, die darüber hinaus wenigstens eine hydrophile Gruppen oder eine potentiell hydrophile Gruppe tragen, wodurch die Wasserdispergierbarkeit der Polyurethane bewirkt wird, zu einem Polyurethan in Gegenwart eines Lösungsmittels und

II. anschließender Dispergierung des Polyurethans in Wasser.

Besonders bevorzugt sind aliphatische Isocyanate, bei denen sämtliche Isocyanatgruppen an eine aliphatische Kette gebunden sind. Erfindungsgemäß bevorzugte aliphatische Isocyanate umfassen 4 bis 12 Kohlenstoffatome. Bevorzugte aliphatische Isocyanate sind Tetramethylendiisocyanat, Hexamethylendiisocyanat (1,6- Diisocyanatohexan), Octamethylendiisocyanat, Decamethylendiisocyanat, Dodecamethylendiisocyanat, Tetradecamethylendiisocyanat, Ester des Lysindiisocyanates, Tetramethylxylylendiisocyanat, Trimethylhexandiisocyanat oder Tetramethylhexandii- socyanat, besonders bevorzugt ist 1,6-Hexamethylendiisocyanat.

Erfindungsgemäß bevorzugte aromatische Isocyanate sind: Isophorondiisocyanat, Toluylendiisocyanate, Dicyclohexylmethandiisocyanat, Phenylendiisocyanat, 2,4- und 2,6-Toluylendiisocyanat, Phenylisocyanat, Isocyanate der Diphenylmethanreihe, 1,5-Naphthalindiisocyanat, p-Chlorphenylisocyanat, ancarbodiimidisiertes Triisopropylphenylendiisocyanat.

Als Diole (b) kommen vornehmlich höhermolekulare Diole (b1) in Betracht, die ein zahlenmittleres Molekulargewicht (Mn) von etwa 500 bis 5000, vorzugsweise von etwa 700 bis 3000 g/mol haben, besonders bevorzugt 800 bis 2500 g/mol.

Bei den Diolen (b1) handelt es sich erfindungsgemäß um Polyesterpolyole. Als Diole (b) können neben den Diolen (b1) noch niedermolekulare Diole (b2) mit einem Molekulargewicht von etwa 50 bis 500, vorzugsweise von 60 bis 200 g/mol, eingesetzt werden.

Als Monomere (b2) werden vor allem die Aufbaukomponenten der für die Herstellung von Polyesterpolyolen genannten kurzkettigen Alkandiole eingesetzt, beispielsweise Ethylenglykol, 1,2-Propandiol, 1,3-Propandiol, 1,1-Dimethylethan-1, 2-diol, 2-Butyl-2-ethyl-1, 3-Propandiol, 2-Ethyl-1, 3-Propandiol, 2-Methyl-1 ,3-Propandiol, Neopentylglykol, Hydroxypivalinsäureneopentylglykolester, 1 ,2-, 1 ,3- oder 1 ,4-Butandiol, 1 ,6-Hexandiol, 1 ,10-Dekandiol, Bis-(4-hydroxycyclohexan)isopropyliden, Tetramethylcyclobutandiol, 1 ,2-, 1 ,3- oder 1 ,4-Cyclohexandiol, Cyclooctandiol, Norbornandiol, Pinandiol, Decalin- diol, 2-Ethyl-1 ,3-Hexandiol, 2,4-Diethyl-oktan-1, 3-diol, Hydrochinon, Bisphenol A, Bisphenol F, Bisphenol B, Bisphenol S, 2,2-Bis(4-hydroxycyclohexyl)propan, 1,1-, 1,2-, 1,3- und 1 ,4-Cyclohexandimethanol, 1,2-, 1,3- oder 1,4-Cyclohexandiol, wobei die unverzweigten Diole mit 2 bis 12 C-Atomen und einer gradzahligen Anzahl von C-Atomen sowie Pentandiol-1 ,5 und Neopentylglykol bevorzugt werden.

Um die Wasserdispergierbarkeit der Polyurethane zu erreichen, sind die Polyurethane neben den Komponenten (a) und (b) vorzugsweise aus von den Komponenten (a) und (b) verschiedenen Monomere (c), die wenigstens eine Isocyanatgruppe oder wenigstens eine gegenüber Isocyanatgruppen reaktiven Gruppe und darüber hinaus wenigstens eine hydrophile Gruppe oder eine Gruppe, die sich in hydrophile Gruppen überführen lässt, tragen, aufgebaut. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen. Bei den (potentiell) hydrophilen Gruppen kann es sich um nichtionische oder bevorzugt um ionische, d.h. kationische oder anionische, hydrophile Gruppen oder um potentiell ionische hydrophile Gruppen und besonders bevorzugt um anionische hydrophile Gruppen oder um potentiell anionische hydrophile Gruppen handeln.

Als nichtionische hydrophile Gruppen kommen beispielsweise gemischte oder reine Polyethylenglykolether aus vorzugsweise 5 bis 100, bevorzugt 10 bis 80 Ethylenoxid- Wiederholungseinheiten in Betracht. Die Polyethylenglykolether können auch Propyle- noxid-Einheiten enthalten. Ist dies der Fall, so soll der Gehalt an Propylenoxid-Einheiten 50 Gew.%, bevorzugt 30 Gew.%, bezogen auf den gemischten Polyethylenglykolether, nicht übersteigen.

Die Monomerauswahl erfolgt dabei bevorzugt so, dass das Polyurethan insbesondere das aliphatische Polyurethan eine Glasübergangstemperatur Tg von 0°C bis -65°C, bevorzugt von -60°C bis -20°C noch bevorzugter von -55°C bis -30°C aufweist.

Geeignete Polyurethane sind beispielsweise in der WO2016/169752 A1 beschrieben, die hiermit durch Verweis einbezogen wird.

Ganz besonders bevorzugt wird ein Polyurethan mit dem Handelsnamen Tubicoat PUS der CHT R. BEITLICH GMBH eingesetzt.

Das erfindungsgemäße Textilkomposit kann lediglich aus Trägerlage und Strömungslage bestehen. Ebenfalls denkbar ist jedoch, dass das Textilkomposit noch weitere Lagen, insbesondere mindestens eine auf der Strömungslage angeordnete Abdecklage aufweist. Dabei ist die Abdecklage vorzugsweise auf der der Trägerlage abgewandten Seite der Strömungslage angeordnet. Vorteilhaft hieran ist, dass die Strömungslage besser vor Beschädigung geschützt werden kann. Als besonders geeignet hat sich die Verwendung von Schmelzspinnvliesstoffen als Abdecklage erwiesen. Bevorzugt liegt das Flächengewicht der Abdecklage unter 25 g/m$^2$, beispielsweise von 12 g/m$^2$ bis 17 g/m$^2$. Ebenfalls bevorzugt besteht die Abdecklage aus thermoplastischen Filamenten, insbesondere Polypropylen-Filamenten.

Die Trägerlage, die Strömungslage und die gegebenenfalls vorhandene Abdecklage können auf die verschiedensten Weisen miteinander verfügt sein. So ist denkbar, dass die Lagen mittels adhäsiven Materialien miteinander verklebt sind. In einer bevorzugten Ausführungsform der Erfindung findet die Verfügung mit der Strömungslage dadurch statt, dass die Schaumlage direkt auf die Trägerlage aufgeschäumt wird. Hierdurch kann ein Textilkomposit erhalten werden, bei dem keine definierte Phasengrenze zwischen Trägerlage und Strömungslage erkennbar ist. Dies ermöglicht die Einstellung eines Dichtegradienten im Grenzbereich der Träger- und der Strömungslage, was sich vorteilhaft auf die akustischen Eigenschaften auswirkt. Darüber hinaus kann auf eine zusätzliche Klebeschicht verzichtet werden, was sich ebenfalls vorteilhaft auf die akustischen Eigenschaften auswirkt.

Erfindungsgemäß weist das Textilkomposit einen Strömungswiderstand von 250 Ns/m$^3$ bis 5000 Ns/m$^3$ auf, noch bevorzugter von 350 Ns/m$^3$ bis 5000 Ns/m$^3$, noch bevorzugter von 450 Ns/m$^3$ bis 5000 Ns/m$^3$, und insbesondere von 550 Ns/m$^3$ bis 5000 Ns/m$^3$. Der Strömungswiderstand des Textilkomposits setzt sich aus den Strömungswiderständen der Trägerlage und der Strömungslage zusammen. Dabei trägt die Strömungslage in der Regel einen deutlich höheren Anteil zum Strömungswiderstand bei. Die Einstellung des Strömungswiderstandes kann deshalb auf einfache Weise durch Auswahl einer geeigneten Strömungslage mit dem gewünschten Strömungswiderstand erfolgen.

Mit dem erfindungsgemäßen Textilkomposit können hervorragende Schallabsorptionsgrade erzielt werden, beispielsweise von 30 % bis 100 %, noch bevorzugter von 40 % bis 100 %, noch bevorzugter von 50 % bis 100 %, jeweils bei 1000 Hz, gemessen nach DIN EN ISO 10534-1. Diese hohen Schallabsorptionsgrade waren für den Fachmann überraschend, da sie höher sind als die Summe der Schallabsorptionsgrade der Strömungslage und Trägerlage, wenn diese für sich alleine gemessen werden.

Das Flächengewicht des Textilkomposits beträgt bevorzugt von 50 g/m² bis 350 g/m², noch bevorzugter von 100 g/m² bis 300 g/m², und insbesondere von 150 g/m² bis 250 g/m². Bei diesen Flächengewichten ist vorteilhaft, dass ein leichtgewichtiges Textilkomposit bereitgestellt werden kann, wodurch wiederum im Automobil aufgrund der Gewichtsersparnis die Emissionen herabgesetzt werden können.

Die Dicke des Textilkomposits beträgt bevorzugt von 5 mm bis 35 mm, noch bevorzugter von 10 mm bis 30 mm, und insbesondere von 15 mm bis 25 mm. Bei Dicken von mindestens 10 mm ist vorteilhaft, dass bereits alleine durch das Textilkomposit ein hoher Wandabstand erzeugt wird, so dass auch die mittellangen akustischen Schallwellen der mittleren Frequenzen und die langen Schallwellen der tiefen Frequenzen innerhalb des Textilkomposits absorbiert werden können.

Ein weiterer Gegenstand der Erfindung ist ein Verfahren zur Herstellung eines erfindungsgemäßen Textilkomposits mit einem Strömungswiderstand von 250 Ns/m³ bis 5000 Ns/m³, umfassend folgende Schritte:

e) Bereitstellen und/oder Herstellen mindestens einer offenporigen Trägerlage umfassend grobe Stapelfasern mit einem Titer von 3 dtex bis 17 dtex, und feine Stapelfasern mit einem Titer von 0,3 dtex bis 2,9 dtex als Gerüstfasern, wobei die Trägerlage ein Vliesstoff ist;

f) Bereitstellen und/oder Herstellen einer Strömungslage umfassend eine mikroporöse Schaumlage; wobei die mikroporöse Schaumlage einen mittleren Porendurchmesser aufweist, der im Bereich von 1 μm bis 30 μm liegt;

g) Anordnen der Strömungslage auf der Trägerlage;

h) Verbinden der Trägerlage und der Strömungslage.

In einer weiteren bevorzugten Ausführungsform der Erfindung findet die Verfügung mit der Strömungslage dadurch statt, dass die Schaumlage direkt auf der Trägerlage ausgebildet wird. Mithin ist ein weiterer Gegenstand der Erfindung ein Verfahren zur Herstellung eines Textilkomposits mit einem Strömungswiderstand von 250 Ns/m³ bis 5000 Ns/m³, umfassend folgende Schritte:

c') Bereitstellen und/oder Herstellen mindestens einer offenporigen Trägerlage umfassend grobe Stapelfasern mit einem Titer von 3 dtex bis 17 dtex und feine Stapelfasern mit einem Titer von 0,3 dtex bis 2,9 dtex als Gerüstfasern, wobei die Trägerlage ein Vliesstoff ist;

d') Ausbilden der mikroporösen Schaumlage, wobei die mikroporöse Schaumlage einen mittleren Porendurchmesser aufweist, der im Bereich von 1 μm bis 30 μm liegt, auf der Trägerlage unter Ausbildung einer Strömungslage.

Das Bereitstellen und/oder Herstellen mindestens einer offenporigen Trägerlage kann über die dem Fachmann bekannten Herstellungsprozesse, beispielsweise über Herstellungsprozesse für trockengelegte Stapelfaservliesstoffe, erfolgen. Erfindungsgemäß geeignete Herstellungsverfahren für die Trägerlage sind beispielsweise Krempelverfahren, sowie aerodynamische Verfahren, wie das Airlay- und Airlaid-Verfahren. Bei dem klassischen Krempelverfahren werden in der Regel die Stapelfasern mittels Arbeiter-Wenderwalzen zur Einzelfaser hin aufgelöst und als Flor abgelegt. Dieser kann anschließend, beispielsweise über einen Kreuzleger dubliert werden um ein- oder mehrlagige Vliese zu bilden. Soll ein Vliesstoff mit einer Faseranordnung in Wirrlage hergestellt werden, so eignen sich insbesondere aerodynamischen Verfahren. Die Wirrlage ist vorteilhaft, da hierdurch voluminöse, druckelastische Vliese bei gleichzeitig niedriger Dichte erhalten werden können. Werden Bindefasern eingesetzt, so können diese beispielsweise im Durchlaufofen bis zum Schmelzpunkt erhitzt werden und somit zur Verfestigung des Vliesstoffs dienen. Die thermische Verfestigung kann vor und/oder nach dem Verbinden zwischen Trägerlage und Strömungslage erfolgen. Auch weitere kontaktlose Verfestigungsarten, wie beispielsweise ein Binderauftrag sind möglich. Besonders bevorzugt wird der Vliesstoff ohne mechanische Verfestigungsverfahren verfestigt, da hierdurch die Voluminösität der Trägerlage nicht beeinträchtigt wird.

Die Schaumlage kann auf herkömmliche Weise durch Aufschäumen von Polymerdispersionen bzw. Polymeremulsionen, beispielsweise durch mechanisches Aufschlagen hergestellt werden und durch übliche Auftragsmethoden, beispielsweise über einen Zwischenträger aufgetragen werden.

Das Verbinden der Trägerlage und der Strömungslage kann auf dem Fachmann bekannte Art und Weise, beispielsweise mittels eines Schmelzklebstoffes oder eines Haftklebstoffes erfolgen. Bevorzugt wird jedoch eine Schaumlage eingesetzt, die ausreichend adhäsiv ist, um auch ohne zusätzlichen Klebstoff mit der Trägerlage verbunden werden zu können.

In einer bevorzugten Ausführungsform der Erfindung wird die Strömungslage direkt auf der Trägerlage und/oder auf der Abdecklage ausgebildet. Dies kann beispielsweise durch direktes Aufschäumen auf die jeweilige Lage bewirkt werden. In dieser Ausführungsform ist vorteilhaft, dass es möglich ist die Ausbildung einer definierten Phasengrenze zwischen Trägerlage/Abdecklage und Strömungslage zu vermeiden. Dies ermöglicht die Einstellung eines Materiengradienten im Grenzbereich der Träger/Abdeck- und der Strömungslage was sich wiederum vorteilhaft auf die akustischen Eigenschaften auswirkt. Darüber hinaus kann auf eine zusätzliche Klebeschicht verzichtet werden, was sich wiederum vorteilhaft auf die akustischen Eigenschaften auswirkt.

Zum Schutz der Strömungslage kann diese optional mit einer Abdecklage, wie oben beschrieben, versehen werden. Dies ist insbesondere für empfindliche Schäume vorteilhaft.

Das erfindungsgemäße Textilkomposit eignet sich hervorragend zur Schallabsorption im Automobilbereich, beispielsweise als Akustikbauteil für den Automobilinnenraum und insbesondere als schallabsorbierende Einlage in Verkleidungsteilen von Automobilen.

Im Folgenden wird die Erfindung anhand mehrerer Beispiele näher erläutert.

Erfindungsgemäßes Textilkomposit (Beispiel 1)

Es wird ein Stapelfaservliesstoff mit einem Flächengewicht von 200 g/m$^2$ und einer Dicke von 21 mm bereitgestellt, welcher aus feinen PET-Stapelfasern mit 1,7 dtex und einer Faserlänge von 38 mm und groben PET-Stapelfasern mit einer Feinheit von 3,3 dtex und einer Faserlänge von 64 mm und PET/ Co-PET Bikomponentenfasern mit 4,4 dtex und einer Faserlänge von 51 mm besteht. Der Stapelfaservliesstoff ist sowohl thermisch als auch bindergebunden. Auf diesen Stapelfaservliesstoff wird eine mikroporöse Polyurethanschaumlage mit einem Flächengewicht von 17 g/m$^2$, einer Dicke von 0,1 mm und einem mittleren Porendurchmesser von 11,1 $\mu$m appliziert.

Vergleichsbeispiel 2: Strömungslage mit nicht optimierter Trägerlage

Es wird ein Stapelfaservliesstoff mit einem Flächengewicht von 300 g/m$^2$ und einer Dicke von 20 mm bereitgestellt, welcher aus groben PET-Stapelfasern mit einer Feinheit von 28 dtex und PET/ Co-PET Bikomponentenfasern mit 10 dtex besteht. Auf diesen Stapelfaservliesstoff wird eine mikroporöse Polyurethanschaumlage mit einem Flächengewicht von 17 g/m$^2$, einer Dicke von 0,1 mm und einem mittleren Porendurchmesser von 11,1 $\mu$m appliziert.

In Bezug auf Beispiel 1 und Vergleichsbeispiel 2 wurden die Strömungswiderstände der Trägerlagen und der Strömungslagen unabhängig voneinander sowie in Kombination nach DIN EN 29053 gemessen.

Da es sich bei der Strömungslage um eine mikroporöse Schaumlage handelt, welche alleinstehend keine ausreichende Festigkeit besitzt, wurde die erfindungsgemäße mikroporöse PU-Schaumlage auf einem leichten Spinnvlies appliziert, welches selbst einen sehr geringen Strömungswiderstand, nämlich von 23 Ns/m$^3$ besitzt um die Messung des Strömungswiderstandes zwar möglichst nicht zu beeinflussen, aber dennoch um die Messung gewährleisten zu können.

| Messproben | Dicke in mm | Strömungswiderstand in Ns/m$^3$ |
|---|---|---|
| Trägerlage Beispiel 1 | 21,0 | 67 |
| Trägerlage Vergleichsbeispiel 2 | 20,0 | 25 |
| Strömungslage Beispiel 1 und Vergleichsbeispiel 2 (inkl. Spinnvlies) | 0,20 | 2614 |
| Beispiel 1 | 21,2 | 2749 |
| Vergleichsbeispiel 2 | 20,2 | 2989 |

Es zeigt sich, dass die hohen Strömungswiderstände fast ausschließlich durch die Strömungslage erzielt werden und die Trägerlage fast keinen Einfluss auf die Einstellung des Strömungswiderstandes hat. Zudem zeigt sich, dass die Gesamtströmungswiderstande von Beispiel 1 und Vergleichsbeispiel 2 in einem ähnlichen Bereich liegen.

Vergleichsbeispiel 3: 3M Thinsulate (TAI3027)

Es wird ein Stapelfaservliesstoff mit einem Flächengewicht von 330 g/m$^2$ und einer Dicke von 21 mm bereitgestellt, welcher zu 65 Gew.% aus feinen Polypropylen-Meltblown-Fasern und zu 35 Gew.% aus groben PET-Stapelfasern besteht. Zusätzlich befindet sich auf einer Seite des Stapelfaservliesstoffes eine Abdecklage aus 100 Gew.% Polypropylen.

Beispiel 4:

Es wird ein Stapelfaservliesstoff mit einem Flächengewicht von 200 g/m$^2$ und einer Dicke von 10 mm bereitgestellt, welcher aus 50 Gew.% feinen PET-Stapelfasern mit 0,6 dtex und 50 Gew.% groben PET-Stapelfasern mit einer Feinheit von 4,4 dtex besteht.

Beispiel 5:

Es wird ein Stapelfaservliesstoff mit einem Flächengewicht von 200 g/m$^2$ und einer Dicke von 10 mm bereitgestellt, welcher aus 80 Gew.% feinen PET-Stapelfasern mit 0,6 dtex und 20 Gew.% groben PET-Stapelfasern mit einer Feinheit von 4,4 dtex besteht.

Kurzbeschreibung der Zeichnung

Figur 1:     Vergleich des Schallabsorptionsgrades im Impedanzrohr (DIN EN ISO 10534) des erfindungsgemäßen Beispiels 1 mit den Vergleichsbeispielen 2 und 3.

Figur 2:     Vergleich des Schallabsorptionsgrades im Impedanzrohr (DIN EN ISO 10534) der im erfindungsgemäßen Beispiel 1 und Vergleichsbeispiel 2 verwendeten Strömungslage (appliziert auf einem akustisch nicht wirksamen Träger) mit der im erfindungsgemäßen Beispiel 1 verwendeten Trägerlage sowie mit der im Vergleichsbeispiel 2 verwendeten Trägerlage.

Figur 3:     Vergleich des Schallabsorptionsgrades im Impedanzrohr (DIN EN ISO 10534) des erfindungsgemäßen Beispiels 1, des Vergleichsbeispiels 2 und der isolierten Strömungslage (appliziert auf einem akustisch nicht wirksamen Träger).

Figur 4:     Vergleich des Schallabsorptionsgrades im Impedanzrohr (DIN EN ISO 10534) des Beispiels 4 mit dem Beispiel 5.

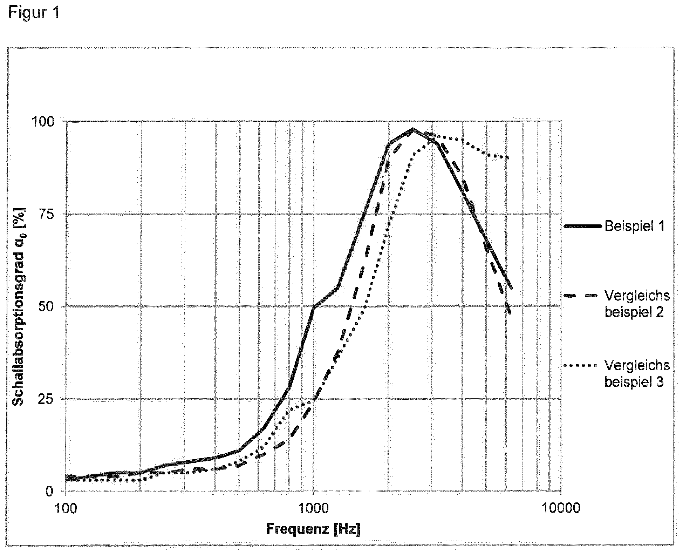

Die Schallabsorptionsgrade von Beispiel 1, Vergleichsbeispiel 2 und 3 wurden gemäß DIN EN ISO 10534-1, Teil 1 gemessen. Die Ergebnisse sind in Figur 1 dargestellt.
Es zeigt sich, dass Beispiel 1 in dem für die Automobilindustrie wichtigen Frequenzbereich von 800 Hz bis 2000 Hz hervorragende akustische Absorptionseigenschaften zeigt. Bei 1000 Hz wurde ein Schallabsorptionsgrad von 50 % erzielt, was überraschend hoch ist. So wurde bei dem Vergleichsbeispiel 2 bei 1000 Hz lediglich ein Wert von 24 % gemessen und bei Vergleichsbeispiel 3 nur ein Wert von 25 % bei 1000 Hz. Insgesamt ist im Frequenzbereich von etwa 800 Hz bis 2500 Hz ein überraschend höherer Schallabsorptionsgrad beim erfindungsgemäßen Textilkomposit zu beobachten, obwohl das Flächengewicht von Beispiel 1 im Vergleich zu Vergleichsbeispiel 2 und 3 geringer ist.

Bekanntermaßen wird die Absorptionsfähigkeit eines porösen Absorbers über den Strömungswiderstand in Kombination mit dem Wandabstand eingestellt. Die Wandabstände sind bei allen Beispielen gleich gewählt, so dass sie keinen Einfluss auf das Ergebnis haben können. Betrachtet man Beispiel 1 und Vergleichsbeispiel 2 so zeigt sich, dass die Gesamtströmungswiderstände von Beispiel 1 und Vergleichsbeispiel 2 sehr ähnlich sind (siehe oben Ziffer 3), so dass dieser Parameter nicht für die unerwartete Verbesserung des Schallabsorptionsgrades verantwortlich sein kann.

Ohne sich erfindungsgemäß auf einen Mechanismus festzulegen, wird vermutet, dass dieser überraschend höhere Schallabsorptionsgrad auf eine synergistische Wechselwirkung zwischen den Feinfasern und den Grobfasern der Trägerlage in Kombination mit der Strömungslage zurückzuführen ist. So wird vermutet, dass die besondere Auswahl von feinen Stapelfasern mit einem Titer von 0,3 dtex bis 2,9 dtex und groben Stapelfasern mit einem Titer von 3 dtex bis 17 dtex in der Trägerlage die Ausbildung einer für die Schallabsorption besonders geeignete Gerüststruktur ermöglicht, die selbst in der Lage ist Schallwellen zu absorbieren. Denn durch die geeignete Auswahl von feinen und groben Stapelfasern wird es ermöglicht die Trägerlage mit einer hohen Kompressibilität und einem hohen Rückstellvermögen auszustatten, wodurch die Trägerlage optimal durch die Schallwellen zur Schwingung anregt wird und somit besonders effizient Schallenergie absorbiert werden kann.

Dabei wirkt das erfindungsgemäße Textilkomposit wie ein biegeweicher Plattenabsorber. Plattenabsorber sind hocheffiziente Absorber, die genau auf die gewünschten Frequenzbereiche eingestellt werden können. Die Schwingmasse ist durch die Masse einer Folie oder einer dünnen Platte realisiert. Beim erfindungsgemäßen Textilkomposit wird die Schwingmasse anhand der Strömungslage realisiert. Die Federung des Resonanzsystems ist beim Plattenabsorber in den meisten Fällen die Federung des Luftpolsters zwischen Folie bzw. Platte und Rückwand. Beim erfindungsgemäßen Textilkomposit fungiert die Trägerlage als Federung. So wird für das erfindungsgemäße Textilkomposit vorzugsweise folgender Aufbau gewählt: Strömungslage - Trägerlage - Wand. Wobei durch die genau definierten sehr guten Kompressions- und Wiedererholungseigenschaften der Trägerlage, die Strömungslage optimal auf der Trägerlage schwingen kann und so zusätzlich innere Verluste im Federvolumen, das heißt innerhalb der Trägerlage, entstehen.

Zusammengefasst bedeutet dies, dass die durch die erfindungsgemäße Auswahl einer spezifischen Trägerlage mit einer hohen Kompressibilität und einem hohen Rückstellvermögen die Wirkungsweise der Strömungslage als porösen Absorber mit einer Zusatzbedämpfung in der Trägerlage erweitert und somit der Schallabsorptionsgrad, insbesondere in dem für die Automobilhersteller wichtigen Frequenzbereich von 800 Hz bis 2000 Hz, mittels Zusammenspiel der Wirkungsweisen des porösen Absorbers und des biegeweichen Plattenabsorbers gesteigert werden kann.

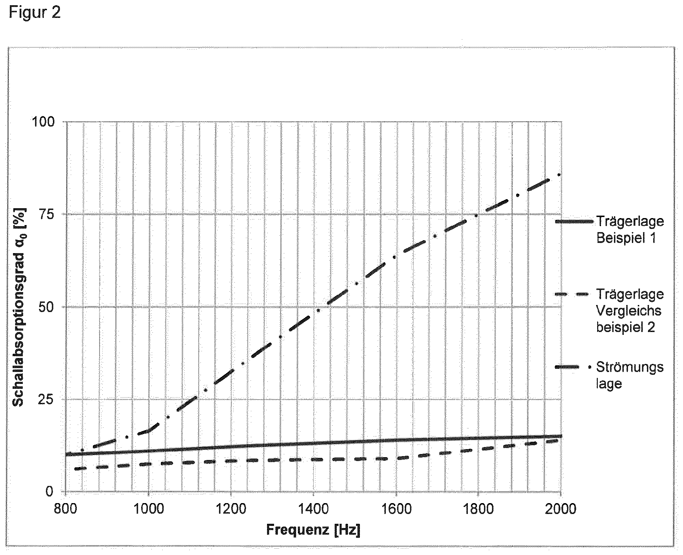

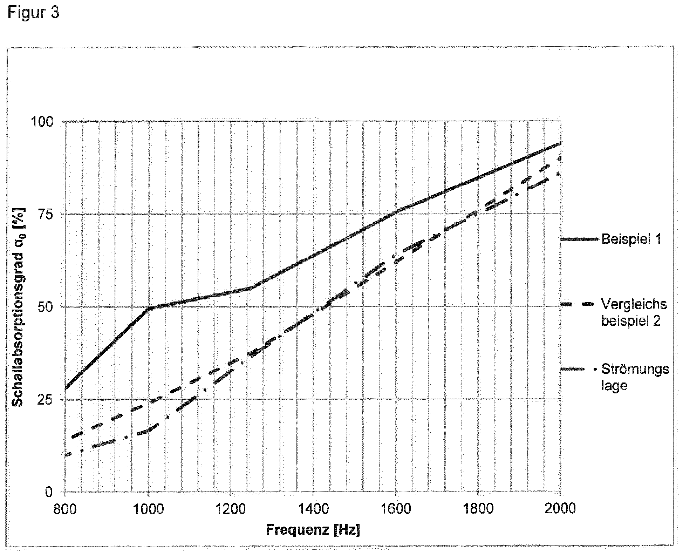

Der überraschende synergistische Effekt der oben beschriebenen akustischen Wirkungsweisen wird auch durch einen Vergleich der Figuren 2 und 3 belegt.

In Figur 2 werden zunächst nur die in den Beispielen verwendeten Einzellagen betrachtet. Konkret wird der Schallabsorptionsgrad im Impedanzrohr (DIN EN ISO 10534) der im erfindungsgemäßen Beispiel 1 und Vergleichsbeispiel 2 verwendeten Strömungslage mit der im erfindungsgemäßen Beispiel 1 verwendeten Trägerlage sowie mit der im Vergleichsbeispiel 2 verwendeten Trägerlage verglichen. Wie auch schon bei den Messungen des Strömungswiderstandes, wird auch für die Messungen im Impedanzrohr die mikroporöse Schaumlage auf einen leichten Spinnvliesstoff appliziert, um die Prüfung durchführen zu können. Es zeigt sich, dass die Trägerlagen in etwa vergleichbare Schallabsorptionsgrade aufweisen. Während die Strömungslage höhere Schallabsorptionsgrade aufweist. So zeigt die Trägerlage aus Beispiel 1 bei 1000 Hz einen Schallabsorptionsgrad von etwa 11 %, die Trägerlage aus Vergleichsbeispiel 2 einen Schallabsorptionsgrad von ca. 8 % und die Strömungslage einen Schallabsorptionsgrad von etwa 17 %.

In Figur 3 wird der Schallabsorptionsgrad im Impedanzrohr (DIN EN ISO 10534) des Textilkomposits gemäß Beispiel 1, des Vergleichsbeispiel 2 und der isolierten Strömungslage verglichen. Es zeigt sich, dass das erfindungsgemäße Beispiel 1 deutlich höhere Schallabsorptionsgrade als sowohl die isolierte Strömungslage als auch das Vergleichsbeispiel 2 aufweist. So zeigt das erfindungsgemäße Beispiel 1 bei 1000 Hz einen Schallabsorptionsgrad von etwa 50 %, das Vergleichsbeispiel 2 einen Schallabsorptionsgrad von ca. 24 % und die Strömungslage einen Schallabsorptionsgrad von etwa 17 %.

Der für das erfindungsgemäße Beispiel 1 ermittelte Wert liegt überraschend hoch. So war davon auszugehen, dass die Schallabsorptionsgrade der einzelnen Lagen nährungsweise miteinander addiert werden können. Dies ergäbe für das Vergleichsbeispiel 2: 8 % [Trägerlage] + 17 % [Strömungslage] = 25 % - was den gemessenen Wert von 24 % sehr ähnelt. Somit sind keine Synergieeffekte zwischen Trägerlage und Strömungslage zu erkennen. Dagegen ergibt sich rechnerisch für Beispiel 1 ein Schallabsorptionsgrad von 11 % [Trägerlage] + 17 % [Strömungslage] = 28 %. Gemessen wurde aber ein Wert von 50 %, was 22 %-Punkte oberhalb des berechneten Wertes liegt und vermutlich auf die oben beschriebenen synergistischen Effekte zwischen der Strömungslage und der Trägerlage und deren besonderer Gerüststruktur zurückzuführen ist.

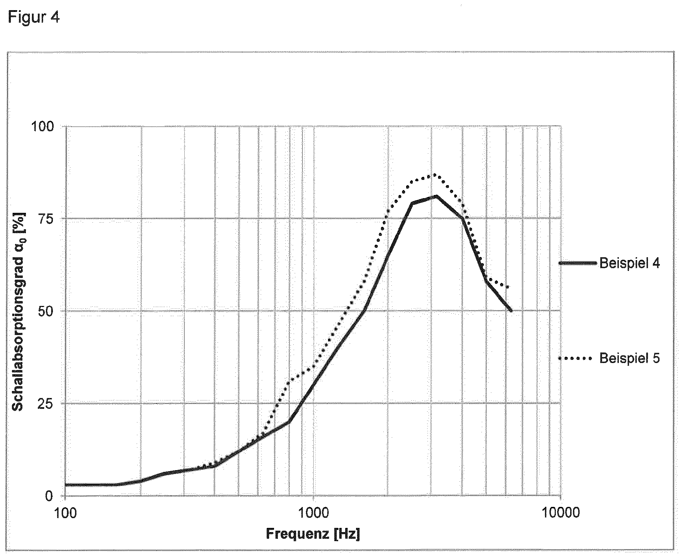

In Figur 4 ist ein Vergleich des Schallabsorptionsgrades im Impedanzrohr (DIN EN ISO 10534) des Beispiels 4 mit dem Beispiel 5 dargestellt. Es zeigt sich, dass Beispiel 4 (Feinfaseranteil von 80 Gew.%) bei 1000 Hz einen höheren Schallabsorptionsgrad aufweist als Beispiel 5 (Feinfaseranteil von 50 Gew.%).

Zur Bestimmung von erfindungsgemäß verwendeten Parametern werden die folgenden Messmethoden verwandt:

**Prüfverfahren für Vliesstoffe zur Bestimmung des Flächengewichts**

Nach ISO 9073-1, wobei die Fläche der Messprobe 100 mm x 100 mm beträgt.

**Prüfverfahren für Vliesstoffe zur Bestimmung der Dicke**

Nach DIN EN ISO 9073-2, Verfahren B und C.

**Bestimmung des Fasertiters**

Nach DIN 53810 (Feinheit von Spinnfasern - Begriffe und Messprinzipien) anhand Mikroskop und entsprechender Software zur Ermittlung der Faserdurchmesser. Es sind 4 Mikropräparate aus insgesamt >20 Einzelfasern vorzubereiten. Pro Mikropräparat werden Fasern mit einer Schere auf eine Länge von ca. 2-3 mm gekürzt und auf einen Objektträger mit Hilfe einer Präpariernadel aufgebracht. Anschließend werden die Faserdurchmesser in $\mu$m mit Zuhilfenahme der entsprechenden Software ermittelt und gemittelt. Der gemittelte Faserdurchmesser kann im Anschluss anhand folgender Formel in den Fasertiter *Tt* umgerechnet werden:

$$Tt\,[dtex] = \frac{\pi * d^2 * \rho}{400}$$

$d$     Faserdurchmesser in $\mu$m

$\rho$     Dichte der Faser in g/cm$^3$

**Bestimmung der Porengrößenverteilung einer Schaumlage**

Die Porengrößenverteilung der mikroporösen Schaumlage wird gemäß ASTM E 1294 (1989) gemessen.

Prüfdaten:

Prüfgerät: PMI.01.01
Probenkörperanzahl: 3
Probengröße: Durchmesser 21 mm
Probendicke: 1 mm
Prüfflüssigkeit: Galden HT230
Einwirkzeit: > 1 min.
Prüftemperatur: 22°C

**Bestimmung der Stapellänge**

Aus einer vorhandenen Faserprobe werden 10 Faserbündelchen ausgewählt, wobei aus jedem der 10 Faserbündelchen eine Einzelfasern mit Zuhilfenahme einer Pinzette entnommen wird und die Faserlänge der 10 Einzelfasern ermittelt wird, indem ein freies Faserende in eine der zwei Einspannklemmen eingespannt wird und das zweite Faserende in die verbleibende Einspannklemme eingespannt wird. Durch Drehen des Handrades wird die Faser gestreckt, bis diese entkräuselt ist. Die Länge der Faser wird von der Skala am Messgerät abgelesen und ist in mm zu notieren. Der Mittelwert aller erfassten Ergebnisse gibt die Stapellänge an:

$$SP\,[mm] = \frac{\Sigma\,L}{n}$$

$\Sigma\,L$     Summe der einzelnen Faserlängen

$n$     Anzahl der Stichprobe

**Bestimmung des Schmelzpunktes**

Nach DIN EN ISO 11357-3, Dynamische Differenz-Thermoanalyse (DSC) - Teil 3: Bestimmung der Schmelz- und Kristallisationstemperatur und der Schmelz- und Kristallisationsenthalpie, wobei eine Aufheizrate von 10 K/min genommen wird.

**Bestimmung der Kompressibilität**

In Anlehnung an DIN 53885 (Bestimmung der Zusammendrückbarkeit von Textilien und textilen Erzeugnissen), wobei die Bestimmung der Zusammendrückbarkeit anhand eines anderen Prüfgerätes durchgeführt wird, als das in der Norm beschriebene. So wird eine Messprobe mit den Maßen 100 mm x 100 mm, eine Messtafel mit einer Längenskala in mm, eine Metallplatte mit den Maßen 120 mm x 120 mm und ein zylinderförmiges Gewicht mit einem Durchmesser von 55 mm und einer Masse von einem Kilogramm, bereitgestellt.

Die Dicke der Messprobe ist vor der Messung im unbelasteten Zustand mit Zuhilfenahme der Messtafel zu bestimmen. Dieser Wert beschreibt die Anfangsdicke $d_0$ in mm. Nachdem die Anfangsdicke im unbelasteten Zustand bestimmt wurde, wird im nächsten Schritt die Metallplatte (100 g) auf die Messprobe gelegt und zentral ausgerichtet. Daraufhin wird das zylinderförmige Gewicht auf die kreisförmige Markierung der Messplatte gestellt und die Messprobe somit mit ca. 1,1 kg belastet. Die absolute Kompressibilität der Messprobe wird anhand folgender Formel ermittelt und gibt die Differenz der Anfangsdicke zur Dicke im belasteten Zustand wieder:

$$K_a\,[mm] = d_0 - d_b$$

$d_0$     Anfangsdicke des Prüfkörpers in mm

$d_b$     Enddicke des Prüfkörpers in mm bei entsprechender Belastung

Die relative Kompressibilität $K_l$ in % ist:

$$K_r\,[\%] = \frac{K_a}{d_0} * 100$$

## Bestimmung des Rückstellvermögens

In Anlehnung an DIN EN ISO 1856 (Weich-elastische polymere Schaumstoffe - Bestimmung des Druckverformungsrestes). Als Messapparatur wird der gleiche Aufbau benutzt wie bereits im Abschnitt "Bestimmung der Kompressibilität" beschrieben wurde. Bei der Bestimmung des Rückstellvermögens wird der Unterschied der Anfangs- und Enddicke eines Materials nach einer Druckverformung über eine bestimmte Zeit, bei einer bestimmten Temperatur und einer festgelegten Erholungszeit ermittelt.

Die Dicke der Messprobe ist vor der Messung im unbelasteten Zustand mit Zuhilfenahme der Messtafel zu bestimmen. Dieser Wert beschreibt die Anfangsdicke $d_0$ in mm. Nachdem die Anfangsdicke im unbelasteten Zustand bestimmt wurde, wird im nächsten Schritt die Metallplatte (100 g) auf die Messprobe gelegt und zentral ausgerichtet. Daraufhin wird das zylinderförmige Gewicht auf die kreisförmige Markierung der Messplatte gestellt und die Messprobe somit mit ca. 1,1 kg über einen Zeitraum von 24 Stunden und bei Raumtemperatur (23°C +/- 2°C) belastet. Nach 24 stündiger Belastung werden das Gewicht und die Metallplatte von der Messprobe entfernt und die Dicke der Messprobe wird nach 30 minütiger Erholungszeit erneut vermessen und der Druckverformungsrest wie folgt bestimmt:

$$DVR\,[\%] = \frac{d_0 - d_r}{d_0} * 100$$

$d_0$     Anfangsdicke des Prüfkörpers in mm

$d_r$     die Dicke des Prüfkörpers nach der Erholung

Aus dem Druckverformungsrest kann das Rückstellvermögen eines Materials anhand folgender Formel berechnet werden:

$$R\,[\%] = 100 - DVR$$

## Bestimmung Volumenverhältnis Luft: Faser

Das Volumen-Verhältnis Luft zu Faser gibt Aufschluss darüber, wie porös ein Material ist. So ist davon auszugehen, dass bei einem hohen Anteil an Luft im Vergleich zu Fasern das Material eine hohe Porosität besitzt. Das Volumenverhältnis $V_{Luft}$ zu $V_{Faser}$ kann wie folgt ermittelt werden. Hierfür wird zunächst das Volumen des Prüfkörpers anhand folgender Formel berechnet:

$$V_{Prüfkörper}\,[cm^3] = l * b * d$$

$l$     Länge des Prüfkörpers in mm
$b$     Breite des Prüfkörpers in mm
$d$     Dicke des Prüfkörpers in mm, gemessen nach DIN EN ISO 9073-2,
       Verfahren B und C

Nachdem nun das Volumen des Prüfkörpers bestimmt wurde, wird im nächsten Schritt das Volumen der im Vliesstoff enthaltenen Fasern anhand folgender Formel ermittelt:

$$V_{Faser}[cm^3] = \frac{m_{Faser}}{\rho_{Faserpolymer}}$$

$m_{Faser}$      Fasermasse des Prüfkörpers in g

$\rho_{Faserpolymer}$      Dichte des Faserpolymers in g/cm$^3$

Wobei bevorzugt Stapelfasern aus dem Polymer Polyethylentherephtalat in der Trägerlage Einsatz finden und somit von einer Faserdichte von ca. 1,38 g/cm$^3$ ausgegangen werden kann. Nach der Berechnung des Faservolumens, kann nun im weiteren Schritt die Bestimmung Luftvolumens anhand folgender Formel erfolgen:

$$V_{Luft}[cm^3] = V_{Prüfkörper} - V_{Faser}$$

Sofern das Luftvolumen und das Faservolumen des Prüfkörpers bestimmt wurden, können diese zwei Volumenwerte nun ins Verhältnis zueinander gesetzt werden.

**Prüfverfahren zur Bestimmung des Strömungswiderstandes**

Nach DIN EN 29053, Verfahren A (Luftgleichstromverfahren), wobei der effektive Probendurchmesser 100 mm beträgt und der Luftdruck 1000 mbar entspricht.

**Prüfverfahren zur Bestimmung des Schallabsorptionsgrades und der Impedanz im Impedanzrohr**

Nach DIN EN ISO 10534-1, Teil 1: Verfahren mit Stehwellenverhältnis (ISO 10534-1:2001-10), wobei Rohrlänge A 100 cm und Rohrquerschnitt A 77 cm$^2$ entspricht und Rohrlänge B 30 cm und Rohrquerschnitt B 6,6 m$^2$ beträgt. Die Prüfkörper des Textilkomposits und der Trägerlagen werden direkt an der schallharten Wand angelegt und gemessen. Die Strömungslage wird in einem Abstand von 20 mm zur schallharten Wand gemessen.

**Patentansprüche**

1. Schallabsorbierendes Textilkomposit mit einem Strömungswiderstand von 250 Ns/m$^3$ bis 5000 Ns/m$^3$, umfassend

    a) mindestens eine offenporige Trägerlage umfassend grobe Stapelfasern mit einem Titer von 3 dtex bis 17 dtex und feine Stapelfasern mit einem Titer von 0,3 dtex bis 2,9 dtex als Gerüstfasern, wobei die Trägerlage ein Vliesstoff ist, und
    b) eine auf der Trägerlage angeordnete Strömungslage umfassend eine mikroporöse Schaumlage, wobei die mikroporöse Schaumlage einen mittleren Porendurchmesser aufweist, der im Bereich von 1 $\mu$m bis 30 $\mu$m liegt.

2. Schallabsorbierendes Textilkomposit nach Anspruch 1, **gekennzeichnet durch** eine Kompressibilität von 70 % bis 100 %, bevorzugter von 75 % bis 100 % und insbesondere von 80 % bis 100 % und/oder ein Rückstellvermögen von 70 % bis 100 %, bevorzugter von 75 % bis 100 % und insbesondere von 80 % bis 100 %.

3. Schallabsorbierendes Textilkomposit nach einem oder mehreren der vorangehenden Ansprüche, **dadurch gekennzeichnet, dass** die Trägerlage zumindest teilweise verschmolzene Bindefasern, insbesondere Kern/Mantel-Fasern, als weitere Fasern enthält.

4. Schallabsorbierendes Textilkomposit nach einem oder mehreren der vorangehenden Ansprüche, **dadurch gekennzeichnet, dass** die Trägerlage die groben Stapelfasern in einem Anteil von 5 Gew.% bis 90 Gew.%, noch bevorzugter von 20 Gew.% bis 90 Gew.% und insbesondere von 30 Gew.% bis 90 Gew.%, jeweils bezogen auf das Gesamtgewicht der Trägerlage, enthält.

5. Schallabsorbierendes Textilkomposit nach einem oder mehreren der vorangehenden Ansprüche, **dadurch gekennzeichnet, dass** die Trägerlage die feinen Stapelfasern in einem Anteil von 10 Gew.% bis 90 Gew.%, bevorzugter von 10 Gew.% bis 80 Gew.% und insbesondere von 10 Gew.% bis 70 Gew.%, jeweils bezogen auf das Gesamtgewicht der Trägerlage enthält.

6. Schallabsorbierendes Textilkomposit nach einem oder mehreren der vorangehenden Ansprüche, **dadurch gekennzeichnet, dass** die als Gerüstfasern eingesetzten feinen und groben Stapelfasern, unabhängig voneinander eine Stapellänge von 20 mm bis 80 mm, bevorzugter von 25 mm bis 80 mm, insbesondere von 30 mm bis 80 mm, aufweisen.

7. Schallabsorbierendes Textilkomposit nach einem oder mehreren der vorangehenden Ansprüche, **dadurch gekennzeichnet, dass** die Trägerlage bindergebunden ist, wobei als Binder bevorzugt Polyacrylate, Polystyrole, Polyvinylacetatethylene, Polyurethane sowie deren Gemische und Co-Polymere eingesetzt werden.

8. Schallabsorbierendes Textilkomposit nach einem oder mehreren der vorangehenden Ansprüche, **dadurch gekennzeichnet, dass** die Trägerlage ein Volumenverhältnis von Luft zu Faser von 50:1 bis 250:1, bevorzugter von 100:1 bis 225:1, insbesondere von 125:1 bis 200:1 aufweist.

9. Schallabsorbierendes Textilkomposit nach einem oder mehreren der vorangehenden Ansprüche, **gekennzeichnet durch** einen Schallabsorptionsgrad von 30 % bis 100 %, bevorzugter von 40 % bis 100 %, noch bevorzugter von 50 % bis 100 %, jeweils bei 1000 Hz.

10. Schallabsorbierendes Textilkomposit nach einem oder mehreren der vorangehenden Ansprüche, **gekennzeichnet durch** ein Flächengewicht von 50 g/m$^2$ bis 350 g/m$^2$, bevorzugter von 100 g/m$^2$ bis 300 g/m$^2$, und insbesondere von 150 g/m$^2$ bis 250 g/m$^2$.

11. Schallabsorbierendes Textilkomposit nach einem oder mehreren der vorangehenden Ansprüche, **gekennzeichnet durch** eine Dicke von 5 mm bis 35 mm, bevorzugter von 10 mm bis 30 mm, und insbesondere von 15 mm bis 25 mm.

12. Verfahren zur Herstellung eines Textilkomposits mit einem Strömungswiderstand von 250 Ns/m$^3$ bis 5000 Ns/m$^3$, umfassend folgende Schritte

   e) Bereitstellen und/oder Herstellen mindestens einer offenporigen Trägerlage umfassend grobe Stapelfasern mit einem Titer von 3 dtex bis 17 dtex, und feine Stapelfasern mit einem Titer von 0,3 dtex bis 2,9 dtex als Gerüstfasern, wobei die Trägerlage ein Vliesstoff ist;
   f) Bereitstellen und/oder Herstellen einer Strömungslage umfassend eine mikroporöse Schaumlage; wobei die mikroporöse Schaumlage einen mittleren Porendurchmesser aufweist, der im Bereich von 1 µm bis 30 µm liegt;
   g) Anordnen der Strömungslage auf der Trägerlage;
   h) Verbinden der Trägerlage und der Strömungslage,

   und/oder umfassend folgende Schritte:

   c') Bereitstellen und/oder Herstellen mindestens einer offenporigen Trägerlage umfassend grobe Stapelfasern mit einem Titer von 3 dtex bis 17 dtex und feine Stapelfasern mit einem Titer von 0,3 dtex bis 2,9 dtex als Gerüstfasern, wobei die Trägerlage ein Vliesstoff ist;
   d') Ausbilden der mikroporöse Schaumlage, wobei die mikroporöse Schaumlage einen mittleren Porendurchmesser aufweist, der im Bereich von 1 µm bis 30 µm liegt, auf der Trägerlage unter Ausbildung einer Strömungslage.

13. Verwendung eines schallabsorbierenden Textilkomposits nach einem oder mehreren der Ansprüche 1 bis 10 zur Schallabsorption im Automobilbereich.

**Claims**

1. Sound-absorbing textile composite with an airflow resistance of 250 Ns/m$^3$ to 5000 Ns/m$^3$, comprising

   a) at least one open-pore supportive ply comprising coarse staple fibres with a linear density of 3 dtex to 17 dtex and fine staple fibres with a linear density of 0.3 dtex to 2.9 dtex as framework fibres, where the supportive ply is a nonwoven fabric, and
   b) arranged on the supportive ply, an airflow-determining ply comprising a microporous foam ply, where the average pore diameter of the microporous foam ply is in the range 1 µm to 30 µm.

**2.** Sound-absorbing textile composite according to Claim 1, **characterized by** compressibility of 70% to 100%, more preferably of 75% to 100% and in particular of 80% to 100% and/or resilience of 70% to 100%, more preferably 75% to 100% and in particular 80% to 100%.

**3.** Sound-absorbing textile composite according to one or more of the preceding claims, **characterized in that** the supportive ply comprises, at least to some extent, as further fibres, molten binder fibres, in particular core/sheath fibres.

**4.** Sound-absorbing textile composite according to one or more of the preceding claims, **characterized in that** the supportive ply comprises a proportion of 5% by weight to 90% by weight of the coarse staple fibres, more preferably 20% by weight to 90% by weight and in particular 30% by weight to 90% by weight, based in each case on the total weight of the supportive ply.

**5.** Sound-absorbing textile composite according to one or more of the preceding claims, **characterized in that** the supportive ply comprises a proportion of 10% by weight to 90% by weight of the fine staple fibres, more preferably 10% by weight to 80% by weight and in particular 10% by weight to 70% by weight, based in each case on the total weight of the supportive ply.

**6.** Sound-absorbing textile composite according to one or more of the preceding claims, **characterized in that** the staple length of the fine and coarse staple fibres used as framework fibres is mutually independently 20 mm to 80 mm, more preferably 25 mm to 80 mm, in particular 30 mm to 80 mm.

**7.** Sound-absorbing textile composite according to one or more of the preceding claims, **characterized in that** the supportive ply is binder-bonded, where binder used preferably comprises polyacrylates, polystyrenes, polyvinyl acetate ethylenes, polyurethanes, or else mixtures or copolymers of these.

**8.** Sound-absorbing textile composite according to one or more of the preceding claims, **characterized in that** the supportive ply has a ratio of air to fibre by volume of 50:1 to 250:1, more preferably of 100:1 to 225:1, in particular of 125:1 to 200:1.

**9.** Sound-absorbing textile composite according to one or more of the preceding claims, **characterized by** a sound absorption coefficient of 30% to 100%, more preferably of 40% to 100%, still more preferably of 50% to 100%, in each case at 1000 Hz.

**10.** Sound-absorbing textile composite according to one or more of the preceding claims, **characterized by** a weight per unit area of 50 g/m$^2$ to 350 g/m$^2$, more preferably of 100 g/m$^2$ to 300 g/m$^2$, and in particular of 150 g/m$^2$ to 250 g/m$^2$.

**11.** Sound-absorbing textile composite according to one or more of the preceding claims, **characterized by** thickness of 5 mm to 35 mm, more preferably of 10 mm to 30 mm, and in particular of 15 mm to 25 mm.

**12.** Process for the production of a textile composite with an airflow resistance of 250 Ns/m$^3$ to 5000 Ns/m$^3$, comprising the following steps:

   e) provision and/or production of at least one open-pore supportive ply comprising coarse staple fibres with a linear density of 3 dtex to 17 dtex and fine staple fibres with a linear density of 0.3 dtex to 2.9 dtex as framework fibres, where the supportive ply is a nonwoven fabric;
   f) provision and/or production of an airflow-determining ply comprising a microporous foam ply; where the average pore diameter of the microporous foam ply is in the range 1 μm to 30 μm;
   g) arrangement of the airflow-determining ply on the supportive ply;
   h) bonding of the supportive ply and the airflow-determining ply,

   and/or comprising the following steps:

   c') provision and/or production of at least one open-pore supportive ply comprising coarse staple fibres with a linear density of 3 dtex to 17 dtex and fine staple fibres with a linear density of 0.3 dtex to 2.9 dtex as framework fibres, where the supportive ply is a nonwoven fabric;
   d') formation of the microporous foam ply, where the average pore diameter of the microporous foam ply on the supportive ply with formation of a flow-determining ply is in the range 1 μm to 30 μm.

**EP 3 375 602 B1**

13. Use of a sound-absorbing textile composite according to one or more of Claims 1 to 10 for sound absorption in the automobile sector.

**Revendications**

1. Composite textile absorbant le son ayant une résistance à l'écoulement de 250 Ns/m$^3$ à 5 000 Ns/m$^3$, comprenant :

   a) au moins une couche support à pores ouverts comprenant des fibres discontinues grossières ayant un titre de 3 dtex à 17 dtex, et des fibres discontinues fines ayant un titre de 0,3 dtex à 2,9 dtex en tant que fibres de squelette, la couche support étant un non-tissé, et
   b) une couche d'écoulement agencée sur la couche support, comprenant une couche de mousse microporeuse, la couche de mousse microporeuse présentant un diamètre de pore moyen qui se situe dans la plage allant de 1 $\mu$m à 30 $\mu$m.

2. Composite textile absorbant le son selon la revendication 1, **caractérisé par** une compressibilité de 70 % à 100 %, de manière davantage préférée de 75 % à 100 %, et notamment de 80 % à 100 %, et/ou une résilience de 70 % à 100 %, de manière davantage préférée de 75 % à 100 %, et notamment de 80 % à 100 %.

3. Composite textile absorbant le son selon une ou plusieurs des revendications précédentes, **caractérisé en ce que** la couche support contient des fibres de liaison au moins partiellement fondues, notamment des fibres noyau/enveloppe, en tant que fibres supplémentaires.

4. Composite textile absorbant le son selon une ou plusieurs des revendications précédentes, **caractérisé en ce que** la couche support contient les fibres discontinues grossières en une proportion de 5 % en poids à 90 % en poids, de manière encore davantage préférée de 20 % en poids à 90 % en poids, et notamment de 30 % en poids à 90 % en poids, à chaque fois par rapport au poids total de la couche support.

5. Composite textile absorbant le son selon une ou plusieurs des revendications précédentes, **caractérisé en ce que** la couche support contient les fibres discontinues fines en une proportion de 10 % en poids à 90 % en poids, de manière davantage préférée de 10 % en poids à 80 % en poids, et notamment de 10 % en poids à 70 % en poids, à chaque fois par rapport au poids total de la couche support.

6. Composite textile absorbant le son selon une ou plusieurs des revendications précédentes, **caractérisé en ce que** les fibres discontinues fines et grossières utilisées en tant que fibres de squelette présentent, indépendamment les unes des autres, une longueur discontinue de 20 mm à 80 mm, de manière davantage préférée de 25 mm à 80 mm, notamment de 30 mm à 80 mm.

7. Composite textile absorbant le son selon une ou plusieurs des revendications précédentes, **caractérisé en ce que** la couche support est liée par un liant, des polyacrylates, des polystyrènes, des polyacétates de vinyle-éthylènes, des polyuréthanes, ainsi que leurs mélanges et copolymères étant de préférence utilisés en tant que liant.

8. Composite textile absorbant le son selon une ou plusieurs des revendications précédentes, **caractérisé en ce que** la couche support présente un rapport volumique entre l'air et les fibres de 50:1 à 250:1, de manière davantage préférée de 100:1 à 225:1, notamment de 125:1 à 200:1.

9. Composite textile absorbant le son selon une ou plusieurs des revendications précédentes, **caractérisé par** un degré d'absorption du son de 30 % à 100 %, de manière davantage préférée de 40 % à 100 %, de manière encore davantage préférée de 50 % à 100 %, à chaque fois à 1 000 Hz.

10. Composite textile absorbant le son selon une ou plusieurs des revendications précédentes, **caractérisé par** un poids surfacique de 50 g/m$^2$ à 350 g/m$^2$, de manière davantage préférée de 100 g/m$^2$ à 300 g/m$^2$, et notamment de 150 g/m$^2$ à 250 g/m$^2$.

11. Composite textile absorbant le son selon une ou plusieurs des revendications précédentes, **caractérisé par** une épaisseur de 5 mm à 35 mm, de manière davantage préférée de 10 mm à 30 mm, et notamment de 15 mm à 25 mm.

12. Procédé de fabrication d'un composite textile ayant une résistance à l'écoulement de 250 Ns/m$^3$ à 5 000 Ns/m$^3$,

17

comprenant les étapes suivantes :

e) la mise à disposition et/ou la fabrication d'au moins une couche support à pores ouverts comprenant des fibres discontinues grossières ayant un titre de 3 dtex à 17 dtex, et des fibres discontinues fines ayant un titre de 0,3 dtex à 2,9 dtex en tant que fibres de squelette, la couche support étant un non-tissé ;
f) la mise à disposition et/ou la fabrication d'une couche d'écoulement comprenant une couche de mousse microporeuse ; la couche de mousse microporeuse présentant un diamètre de pore moyen qui se situe dans la plage allant de 1 $\mu$m à 30 $\mu$m ;
g) l'agencement de la couche d'écoulement sur la couche support ;
h) la liaison de la couche support et de la couche d'écoulement,

et/ou comprenant les étapes suivantes :

c') la mise à disposition et/ou la fabrication d'au moins une couche support à pores ouverts comprenant des fibres discontinues grossières ayant un titre de 3 dtex à 17 dtex, et des fibres discontinues fines ayant un titre de 0,3 dtex à 2,9 dtex en tant que fibres de squelette, la couche support étant un non-tissé ;
d') la formation de la couche de mousse microporeuse, la couche de mousse microporeuse présentant un diamètre de pore moyen qui se situe dans la plage allant de 1 $\mu$m à 30 $\mu$m, sur la couche support avec formation d'une couche d'écoulement.

13. Utilisation d'un composite textile absorbant le son selon une ou plusieurs des revendications 1 à 10 pour l'absorption du son dans le domaine automobile.

Figur 1

Figur 2

Figur 3

Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5298694 A
- DE 10163576 B4
- EP 1058618 B1
- WO 2016169752 A1